# EUROPÄISCHE PATENTSCHRIFT

(11) **EP 1 926 892 B1**
(45) Veröffentlichungstag und Bekanntmachung des Hinweises auf die Patenterteilung: **12.01.2011**
(21) Anmeldenummer: 06777895.1
(22) Anmeldetag: 21.07.2006
(51) Int. Cl.: F01N 3/20, F02M 63/02, F02M 55/00

(54) **KRAFTSTOFFEINSPRITZSYSTEM MIT VERRINGERTER SCHADSTOFFEMISSION**
FUEL INJECTION SYSTEM HAVING REDUCED POLLUTANT EMISSIONS
SYSTEME D'INJECTION DE CARBURANT A EMISSIONS POLLUANTES REDUITES

(30) Priorität: 30.08.2005 DE 102005040918
(43) Veröffentlichungstag der Anmeldung: 04.06.2008
(73) Patentinhaber: ROBERT BOSCH GMBH, 70442 Stuttgart (DE)
(72) Erfinder: RAPP, Holger, 71254 Ditzingen (DE); SCHULZ, Udo, 71665 Vaihingen/Enz (DE)
(86) Internationale Anmeldenummer: PCT/EP2006/064520
(87) Internationale Veröffentlichungsnummer: WO 2007/025803

(56) Entgegenhaltungen:
- EP-A2- 1 359 306
- WO-A-02/43840
- WO-A-2005/010351
- DE-A1- 19 625 447
- FR-A- 2 879 241
- GB-A- 2 357 047

## Beschreibung

Die Erfindung betrifft ein Kraftstoffeinspritzsystem für Verbrennungskraftmaschinen, insbesondere für direkteinspritzende Verbrennungskraftmaschinen, welches gegenüber herkömmlichen Kraftstoneinspritzsystemen eine verringerte Schadstoffemission aufweist. Derartige Kraftstoffeinspritzsysteme sind insbesondere für Verbrennungskraftmaschinen in der Kraftfahrzeugtechnik im Nutzfahrzeugbereich und im Pkw-Bereich einsetzbar.

### Stand der Technik

In der Technologie der Verbrennungskraftmaschinen kommen in zunehmendem Maße direkteinspritzende Verbrennungskraftmaschinen zum Einsatz, insbesondere im Bereich der Dieselmotoren. Dabei wird Kraftstoff aus einem Kraftstofftank über ein Hochdruckpumpensystem in einen Hochdruckspeicher (Common Rail) gespeist, welcher wiederum mit einem oder mehreren Kraftstoffinjektoren zum Einspritzen des Kraftstoffs in den Brennraum der Verbrennungskraftmaschine in Verbindung steht.

Im Rahmen verschärfter Abgasnormen und dem ständigen Bestreben, Umweltbelastungen zu reduzieren, kommen bereits heute zahlreiche Systeme zur Nachbehandlung von Abgasen dieser Verbrennungskraftmaschinen zum Einsatz. Hierbei sind insbesondere Partikelfilter, Katalysatoren oder Kombinationen derartiger Systeme zu erwähnen. Diese Systeme zur Nachbehandlung der Abgase sind jedoch häufig mit dem Nachteil verknüpft, dass eine regelmäßige Regeneration dieser Systeme erforderlich ist, um in diesen Systemen angesammelte Partikel, beispielsweise Rußpartikel, zu entfernen. Diese Regeneration kann beispielsweise durch kurzfristige Temperaturerhöhungen erfolgen, bei welchen Partikel in den Abgasreinigungssystemen oxidiert und somit aus den Abgasreinigungssystemen entfernt werden. Gespeichertes NOx wird üblicherweise durch unverbrannte Kohlenwasserstoffe reduziert.

Ein aus dem Stand der Technik bekanntes Verfahren zur Nachbehandlung von Abgasen ist in DE 198 30 275 A1 offenbart. Hierbei ist eine Einrichtung zum Nachbehandeln von Abgasen in Form eines Reduktionskatalysators zur Reduzierung von NOx-Bestandteilen eines Abgasstroms vorgesehen. Als Reduktionsmittel dient dabei Dieselkraftstoff, der durch eine im Abgasrohr angeordnete spezielle Einspritzdüse derart eingebracht wird, dass er in einem dünnen Strahl auf die Öffnung des sich nach einem Arbeitsspiel der Brennkraftmaschine öffnenden Auslassventils gerichtet ist. Der so eingebrachte Kraftstoff wird durch "Cracken" (Spalten) und Verdampfen als Reduktionsmittel für die Reduktion der im Reduktionskatalysator gespeicherten NOx-Anteile des Abgases aufbereitet.

Das in DE 198 30 275 A1 offenbarte Verfahren zur Unterstützung der Abgasaufbereitung ist ein Beispiel eines so genannten Nacheinspritzungsverfahrens. Derartige Einspritzkonzepte mit Nacheinspritzungen zur Unterstützung der Abgasaufbereitung und/oder der Regeneration der Systeme zur Abgasaufbereitung haben jedoch den Nachteil, dass die Nacheinspritzung sehr genau zeitlich gesteuert werden muss. Die Nacheinspritzung erfolgt entweder durch das Kraftstoffeinspritzventil selbst oder, wie im Fall der DE 198 30 275 A1, durch eine spezielle Einspritzdüse.

Wird die Nacheinspritzmenge jedoch zu früh in den Motor eingebracht, so verbrennt diese bereits im Motor, so dass zum einen die Abgastemperatur in unerwünschter Weise beeinflusst wird und zum anderen die erwünschte Unterstützungs- und/oder Aufbereitungswirkung des Systems zur Abgasaufbereitung verloren geht. Bei einer zu späten Einspritzung hingegen tritt der gewünschte Crack-Effekt nicht ein, so dass die Nacheinspritzmenge beispielsweise auf die Zylinderwand auftrifft, den dort befindlichen Schmierfilm abspült und eine Schmierölverdünnung mit Dieselkraftstoff auslöst. Im Falle einer zu frühen Einspritzung tritt also eine Abgasverschlechterung auf, und im Falle einer zu späten Nacheinspritzung ein erhöhter Verschleiß im Motor infolge verschlechterter Schmierung. Letzteres kann im Extremfall zu einem so genannten "Durchgehen" des Motors aufgrund unkontrollierter Verbrennung stark dieselhaltigen Schmieröls führen.

Eine Abhilfe der genannten Problematik ließe sich dadurch schaffen, dass die Nacheinspritzung nicht in die Brennkammer, sondern unmittelbar in den heißen Abgastrakt der Verbrennungskraftmaschine erfolgt. Bei derartigen Konzepten wird über ein separates Niederdruck-Einspritzventil mit vorgeschalteter elektrisch betätigter Dosierpumpe gearbeitet. Derartige Systeme sind auch als "HCI-Systeme" (englisch "Hydro Carbon Injection") bekannt. Mit derartigen Systemen besteht auch die Möglichkeit, im Motorsteuergerät mit Ein-Bank-Einspritzstufenkonzepten auszukommen anstelle von Zwei-Bank-Einspritzstufenkonzepten, da die späten Nacheinspritzungen über die Injektoren in der Verbrennungskraftmaschine entfallen. Somit sind Elektronik- und Materialkosten geringer, und eine Verlustleistung des Motorsteuerungsgerätes wird reduziert. Zudem wird der Mengenbedarf aus der Hochdruckpumpe reduziert, wodurch auch die Verwendung kleinerer Pumpen, insbesondere von Einstempel-Pumpen, ermöglicht wird. Die Leistungsverluste infolge notwendiger Hochdruckerzeugung sind somit geringer.

Dennoch sind derartige HCl-Systeme mit dem Nachteil verbunden, dass aufwändige zusätzliche Komponenten erforderlich sind. So ist insbesondere ein separates Niederdruck-Einspritzventil mit vorgeschalteter elektrisch betätigter Dosierpumpe erforderlich. Insbesondere die Verwendung derartiger aufwändiger Dosierpumpen mit entsprechender elektrischer Steuerung sorgt daher dafür, dass derartige HCl-Systeme raumaufwändig und kostenintensiv sind.

Aus der WO 02/43840 ist es bekannt, einen am Abgastrakt angeordneten Injektor über eine unter Hochdruck arbeitende Kraftstoffeinspritzeinrichtung zu speisen.

### Vorteile der Erfindung

Es wird daher ein Kraftstoffeinspritzsystem vorgeschlagen, welches die Nachteile der aus dem Stand der Technik bekannten Systeme zur Unterstützung einer Abgasaufbereitung vermeidet und auf einfache Weise realisierbar ist. Ein Grundgedanke der vorliegenden Erfindung besteht darin, das aus den HCl-Systemen bekannte Konzept dahingehend zu modifizieren, dass der Einsatz einer Niederdruckpumpe für ein Dosierventil entfallen kann. Eine Grundidee besteht dabei darin, den ohnehin in vielen Verbrennungskraftmaschinen enthaltenen Niederdruckbereich dahingehend zu modifizieren, dass dieser gleichzeitig zur Druckbeaufschlagung des Dosierventils dient, wodurch die Niederdruckpumpe entfallen kann.

Das Kraftstoffeinspritzsystem weist einen Hochdruckteil und einen Niederdruckteil auf, wobei im Hochdruckteil Kraftstoff aus mindestens einem Hochdruckspeicher mindestens einem Kraftstoffinjektor zuführbar ist. Im Niederdruckteil, welcher insbesondere als Leckage-Rückführung ausgeführt sein kann, ist der mindestens eine Kraftstoffinjektor mit mindestens einem Niederdruckspeicher verbunden. Beispielsweise kann es sich dabei um ein so genanntes "Leckagerail" handeln.

Ein weiterer Grundgedanke der Erfindung besteht darin, in dem mindestens einen Niederdruckspeicher mindestens ein Druckhalteventil vorzusehen. Niederdruckspeicher mit Niederdruckhalteventilen sind aus dem Stand der Technik bekannt, beispielsweise aus WO 2005/010351 A1. Bei diesen bekannten Systemen handelt es sich überwiegend um Piezoinjektoren mit hydraulischen Kopplern zur Hubübersetzung und zum Temperaturausgleich, welche zur Wiederbefüllung des

Kopplers einen Druck im Rücklaufzweig von ca. 10 bar benötigen. Aus Kosten- und Einfachheitsgründen wird dieser Druck erzeugt, indem die Leckageleitungen der Injektoren zu einem Leckagerail zusammengefasst werden, wobei die über dieses Leckagerail abfließende Absteuermenge der Injektoren über ein mechanisches Druckhalteventil geführt und dort auf ca. 10 bar angestaut wird.

Eine Erkenntnis der vorliegenden Erfindung besteht also darin, dieses Aufstauen des Drucks durch das mindestens eine Druckhalteventil gleichzeitig zum Aufbau eines erforderlichen Dosierdrucks zu verwenden und somit eine Niederdruckpumpe für die Dosierung zu ersetzen. Vorzugsweise ist dabei das mindestens eine Druckhalteventil derart ausgebildet, dass der in dem mindestens einen Niederdruckspeicher aufrechterhaltbare Druck einen vorgegebenen Maximaldruck nicht übersteigt. Vorzugsweise wird der Druck auf zwischen 5 bar und 20 bar eingestellt, besonders bevorzugt auf 10 bar.

Weiterhin weist das erfindungsgemäße Kraftstoffeinspritzsystem eine Einrichtung zur Nachbehandlung von Abgasen der Verbrennungskraftmaschine in einem Abgastrakt auf. Besonders bevorzugt weist diese Einrichtung wiederum einen Filter, insbesondere einen Partikelfilter, vorzugsweise einen NOx-Partikelfilter und/oder einen Rußpartikelfilter, und/oder einen Katalysator, insbesondere einen Speicherkatalysator, vorzugsweise einen NOx-Speicherkatalysator, auf.

Weiterhin ist in dem Kraftstoffeinspritzsystem mindestens eine Dosiereinrichtung zum dosierten Einbringen von Kraftstoff in den Abgastrakt vorgesehen. Diese mindestens eine Dosiereinrichtung ist mit dem mindestens einen Niederdruckspeicher fluidisch verbunden, wobei vorzugsweise keine zusätzliche Niederdruckpumpe zur Erreichung eines Dosierdruckes vorgesehen ist. Die mindestens eine Dosiereinrichtung weist vorzugsweise mindestens ein Dosierventil auf.

Die mindestens eine Dosiereinrichtung kann vorzugsweise in einem Abgaskrümmer des Abgastraktes angeordnet sein. Dies gewährleistet, dass eine besonders effiziente Zerstäubung und Verteilung des eindosierten Kraftstoffs im Abgastrakt erfolgt. Weiterhin gewährleistet diese Anordnung, dass ein sicheres und zuverlässiges Cracken des Kraftstoffs, insbesondere des Dieselkraftstoffs, im heißen Abgas erfolgt. Der eindosierte Kraftstoff dient, wie auch im Stand der Technik, zur Regeneration der mindestens einen Einrichtung zur Nachbehandlung der Abgase und/oder zur Unterstützung der Nachbehandlung. So kann beispielsweise der eindosierte Kraftstoff durch Verbrennung in der Einrichtung zur Nachbehandlung von Abgasen dort kurzfristig für eine Temperaturerhöhung sorgen, wobei beispielsweise Rußpartikel ausgebrannt und in Form von Kohlendioxid beseitigt werden.

Diese Verbrennung kann zusätzlich durch eine oder mehrere Heizeinrichtungen in der Einrichtung zur Nachbehandlung der Abgase unerstützt werden, welche vorzugsweise mit der Eindosierung von Kraftstoff in den Abgastrakt zusammenwirkt. So kann durch diese Heizeinrichtung kurzfristig die Temperatur erhöht werden, um die Reaktion des eindosierten Kraftstoffs mit den Verunreinigungen zu unterstützen.

Weiterhin kann der eindosierte Kraftstoff auch als Reduktionsmittel wirken, wobei vorzugsweise zunächst ein Cracken (z. B. ein thermisch unterstütztes Cracken) des eindosierten Kraftstoffs erfolgt, um so ein besonderes wirksames Reduktionsmittel zur Reduktion von beispielsweise NOx zur Verfügung zu stellen. Auch dieser Vorgang kann also durch eine Heizeinrichtung zusätzlich unerstützt werden.

Die Einspritzung von Kraftstoff in das Abgassystem kann beispielsweise periodisch erfolgen, beispielsweise mit jedem Zyklus der Verbrennungskraftmaschine. Alternativ oder zusätzlich können jedoch auch in vorgegebenen oder variablen Abständen besondere Einspritzungen vorgesehen sein, beispielsweise alle 10 km oder alle 1000 km, durch welche ein besonderer Regenerationsvorgang eingeleitet wird. Dabei können beispielsweise für die permanente Einspritzung in den Abgastrakt zur Unterstützung der Abgasaufbereitung und für eine Regenerationseinspritzung jeweils unterschiedliche Einspritzmengen vorgesehen sein. Diese Einspritzung kann beispielsweise durch ein Motorsteuerungsgerät gesteuert werden. Es können auch mehrere Einspritzstellen vorgesehen sein, welche beispielsweise zu unterschiedlichen Zeiten und zu unterschiedlichen Zwecken eingesetzt werden.

Besonders bevorzugt ist es, wenn die mindestens eine Dosiereinrichtung und der mit der mindestens einen Dosiereinrichtung fluidisch verbundene mindestens eine Niederdruckspeicher aufeinander abgestimmt sind. Dies kann beispielsweise dadurch erfolgen, dass in dem mindestens einen Niederdruckspeicher oder eine andere Komponente des Niederdruckteils ein Druckmesssystem zur Erfassung des Drucks in dem mindestens einen Niederdruckspeicher vorgesehen ist. Auch weitere Messsysteme können vorgesehen sein, beispielsweise Temperaturmesssysteme, welche die Kraftstofftemperatur in dem mindestens einen Niederdruckspeicher erfassen. Die Verwendung eines Druckmesssystems hat sich als besonders vorteilhaft erwiesen im Zusammenspiel mit einer weiteren vorteilhaften Ausgestaltung der Erfindung, bei welchem das mindestens eine Druckhalteventil eine Drosselbohrung aufweist, insbesondere als Drosselbohrung ausgestaltet ist.

Die mindestens eine Dosiereinrichtung kann auf diese Parameter des Kraftstoffs in dem mindestens einen Niederdruckspeicher abgestimmt sein, wozu beispielsweise ein Steuergerät verwendet werden kann (beispielsweise das Motorsteuerungsgerät). So kann beispielsweise die mindestens eine Dosiereinrichtung durch das Steuergerät in Abhängigkeit vom erfassten Druck in dem mindestens einen Niederdruckspeicher gesteuert werden. Insbesondere kann auf diese Weise die Dosierdauer, z. B. die Öffnungszeitdauer eines Dosierventils, an den erfassten Druck im Niederdruckspeicher angepasst werden. Auf diese Weise kann sichergestellt werden, dass die Einspritzmenge vorgegebene Toleranzen nicht über- und/oder unterschreitet. Auch kann die Dosierung in Abhängigkeit von der Kraftstofftemperatur erfolgen, wobei beispielsweise bei erhöhter Kraftstofftemperatur (und damit verbundener erhöhter Reaktivität des Kraftstoffs) nur eine geringere Kraftstoffmenge eindosiert wird. Auch dies erhöht die Effizienz des Kraftstoffeinspritzsystems zur Aufbereitung der Abgase.

Das erfindungsgemäße Kraftstoffeinspritzsystem in einer der oben beschriebenen Ausgestaltungen weist gegenüber herkömmlichen, aus dem Stand der Technik bekannten Kraftstoffeinspritzsystemen zahlreiche Vorteile auf. So lässt sich insbesondere, wie oben bereits beschrieben, auf den Einsatz einer Niederdruckpumpe zum Dosieren von Kraftstoff verzichten. Dadurch lassen sich Montageschritte einsparen, und das System lässt sich platzsparender und kostengünstiger ausgestalten. Auch lassen sich zusätzliche elektrische oder elektronische Steuerungen für die Dosierpumpe einsparen. Auf diese Weise sind auch beispielsweise beim Piezo-Common-Rail-Einspritzsystem Niedrigkostenlösungen realisierbar. Natürlich lässt sich auch das erfindungsgemäße Kraftstoffeinspritzsystem zusätzlich durch eine Niederdruckpumpe erweitern, wobei jedoch im erfindungsgemäßen Sinne diese Niederdruckpumpe kleiner dimensioniert werden kann als bei herkömmlichen Systemen.

Ein weiterer Vorteil des erfindungsgemäßen Systems besteht darin, dass der Kraftstoff, aus dem Vorratstank kommend, zunächst über den Hochdruckspeicher kommend über Drosseln im Kraftstoffinjektor strömt, bevor er in den Niederdruckspeicher gelangt. Dabei erwärmt sich dieser Kraftstoff erheblich, typischerweise um ca. 60 °C, und weist folglich im Niederdruckspeicher eine gegenüber dem Vorratstank und/oder dem Hochdruckspeicher deutlich erhöhte Temperatur auf. Dies hat, je nach Anwendungsgebiet, mehrere Vorteile.

Wird der eingespritzte Kraftstoff zur Unterstützung der Nachbehandlung der Abgase eingesetzt, beispielsweise zu einer Reduktion von NOx, so bewirkt die erhöhte Temperatur des eingespritzte Kraftstoffs, dass dieser reaktiver ist und/oder leichter in reaktive Reduktionsmedien umgewandelt werden kann. Auch bei der Regeneration von Einrichtungen zur Nachbehandlung von Abgasen, beispielsweise bei einer Regeneration von Rußpartikelfiltem, ist die erhöhte Temperatur des eingespritzte Kraftstoffs von erheblichem Vorteil.

Ein weiterer Vorteil des erfindungsgemäßen Systems besteht in der Homogenität des eingespritzten Kraftstoffs im Abgastrakt. Einbrüche des Drucks im Niederdruckspeicher durch die Nacheinspritzung über die Dosiereinrichtung sind bei derzeitigen Verbrennungskraftmaschinen, insbesondere Verbrennungskraftmaschinen mit Piezoinjektoren, nicht zu erwarten, da der über den Niederdruckspeicher zurücklaufende Rücklauf-Volumenstrom an Kraftstoff aus den Kraftstoffinjektoren den Mengenbedarf der nach Einspritzung in jedem Fall übersteigt. Wie oben beschrieben, kann, je nach Regelgenauigkeit des Druckhalteventils am Niederdruckspeicher, optional der Druck im Niederdruckspeicher zusätzlich vom Motorsteuerungsgerät erfasst und zur Ansteuerdauerberechnung der Dosiereinrichtung herangezogen werden. Auf diese Weise wird die Gleichmäßigkeit der Nacheinspritzung zusätzlich erhöht.

### Zeichnung

Anhand der Zeichnung wird die Erfindung nachstehend näher erläutert.

Es zeigt:

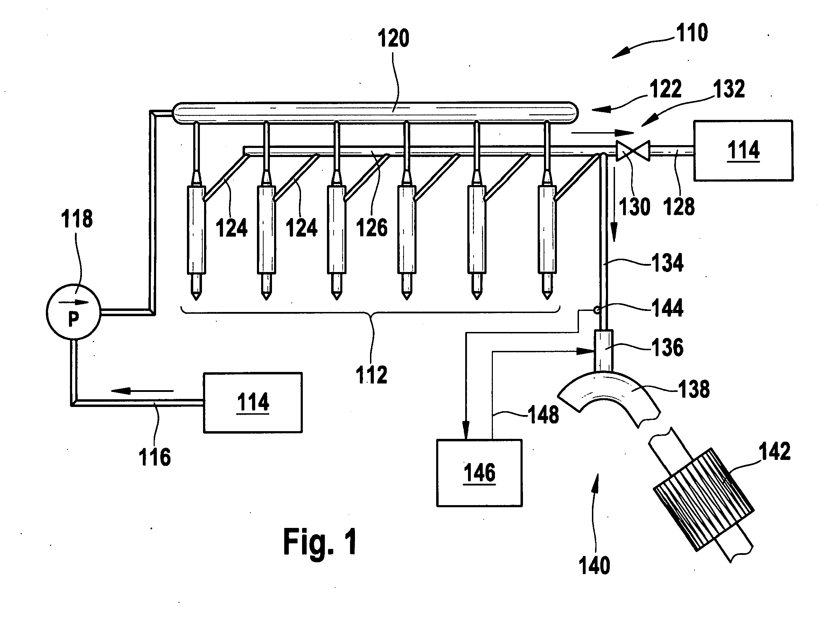

- Figur 1: ein erfindungsgemäßes Kraftstoffeinspritzsystem ohne zusätzliche Dosierpumpe zur Nacheinspritzung von Kraftstoff.

### Ausführungsbeispiele

In der einzigen Figur (Figur 1) ist ein erfindungsgemäßes Kraftstoffeinspritzsystem gemäß einer besonders bevorzugten Ausgestaltung dargestellt. Dabei handelt es sich um ein so genanntes HCI-System, welches zur Regeneration eines Partikelfilters eingesetzt wird.

Das Kraftstoffeinspritzsystem 110 weist eine (symbolisch dargestellte) Bank von Kraftstoffinjektoren 112 auf, mittels derer Kraftstoff in Brennräume der Verbrennungskraftmaschine eingespritzt werden kann. In diesem Ausführungsbeispiel sei angenommen, dass es sich bei diesen Kraftstoffinjektoren 112 um Conunon-Rail-Piezo-Kraftstoffinjektoren handelt. Dabei wird aus einem Kraftstoffvorratstank 114 über eine Kraftstoffleitung 116 und eine Hochdruckpumpe 118 Kraftstoff in einen Hochdruckspeicher 120 (Common Rail) gepumpt. Dieser Hochdruckspeicher 120 ist Teil eines Hochdruckteils 122 des Kraftstoffeinspritzsystems. Aus dem Hochdruckspeicher 120, in welchem typischerweise ein Druck zwischen 200 bar und 2000 bar herrscht, werden die Kraftstoffinjektoren 112 mit Kraftstoff für die Injektion beaufschlagt.

Wie aus dem Stand der Technik bekannt, weisen die Kraftstoffinjektoren 112 jeweils Rücklaufzweige 124 auf, welche in diesem Ausführungsbeispiel durch einen Niederdruckspeicher 126 in Form eines Rücklaufrails zusammengefasst sind. Über einen Niederdruckablauf 128 wird Kraftstoff aus dem Niederdruckspeicher 126 in den Kraftstoffvorratstank 114 zurückgeführt.

Die Rücklaufzweige 124 und der Niederdruckspeicher 126 bilden somit Bestandteile eines Niederdruckteils 132 des Kraftstoffeinspritzsystems 110. Dabei ist zwischen Niederdruckspeicher 126 und Niederdruckablauf 128 ein Druckhalteventil 130 vorgesehen. Dieses Druckhalteventil 130 ist derart ausgestaltet, dass der Druck im Niederdruckspeicher 126 auf ca. 10 bar eingestellt wird.

Weiterhin ist eine Dosierleitung 134 vorgesehen, welche vom Niederdruckspeicher 126 abzweigt und zu einer Dosiereinrichtung 136 in Form eines Dosierventils führt. Auch andere Ausgestaltungen sind denkbar, beispielsweise eine unmittelbare Anbindung des Niederdruckspeichers 126 an die Dosiereinrichtung 136 ohne Zwischenschaltung einer Dosierleitung 134.

Die Dosiereinrichtung 136 ist in einen Abgaskrümmer 138 eines Abgastraktes 140 der Verbrennungskraftmaschine eingelassen. Dabei ist die Dosiereinrichtung 136 derart ausgestaltet, dass diese Kraftstoff aus der Dosierleitung 134 in den Abgastrakt 140 einspritzen kann. Weiterhin weist der Abgastrakt 140 in diesem Ausführungsbeispiel eine Einrichtung 142 zur Nachbehandlung der Abgase im Abgastrakt 140 auf, welche hier als Partikelfilter ausgestaltet ist. Der über die Dosiereinrichtung 136 eingespritzte Kraftstoff bewirkt einen Rußabbrand im Partikelfilter 142 und somit eine Regeneration dieses Partikelfilters.

Weiterhin weist das erfindungsgemäße Kraftstoffeinspritzsystem gemäß der Ausgestaltung in Figur 1 ein Druckmesssystem 144 in Form eines Drucksensors auf, welcher Informationen über den Druck im Niederdruckteil 132 an ein Steuergerät 146 liefert. Das Steuergerät 146 steuert über eine Steuerleitung 148 das Dosierverhalten der Dosiereinrichtung 136, insbesondere ein Öffnen und Schließen eines Dosierventils der Dosiereinrichtung 136. Auf diese Weise kann beispielsweise in regelmäßigen Abständen eine Regeneration des Partikelfilters 142 erfolgen.

## Patentansprüche

1. Kraftstoffeinspritzsystem (110) für eine Verbrennungskraftmaschine, aufweisend einen Hochdruckteil (122) und einen Niederdruckteil (132), wobei im Hochdruckteil (122) Kraftstoff aus mindestens einem Hochdruckspeicher (120) mindestens einem Kraftstoffinjektor (112) zuführbar ist, wobei im Niederdruckteil (132) der mindestens eine Kraftstoffinjektor (112) mit mindestens einem Niederdruckspeicher (126) verbunden ist, wobei in dem mindestens einen Niederdruckspeicher (126) durch mindestens ein Druckhalteventil (130) ein Druck aufrechterhaltbar ist, weiterhin aufweisend mindestens eine Dosiereinrichtung (136) zum dosierten Einbringen von Kraftstoff in einen Abgastrakt (140), wobei die mindestens eine Dosiereinrichtung (136) mit dem mindestens einen Niederdruckspeicher (126) fluidisch verbunden ist, wobei die Dosiereinrichtung (136) abgasstromaufwärts mindestens einer Einrichtung (142) zur Nachbehandlung von Abgasen der Verbrennungskraftmaschine anordenbar ist.

2. Kraftstoffeinspritzsystem (110) gemäß dem vorhergehenden Anspruch, **dadurch gekennzeichnet, dass** die mindestens eine Dosiereinrichtung (136) mindestens ein Dosierventil aufweist.

3. Kraftstoffeinspritzsystem (110) gemäß einem der beiden vorhergehenden Ansprüche, **dadurch gekennzeichnet, dass** die mindestens eine Dosiereinrichtung (136) in einem Abgaskrümmer (138) des Abgastraktes (140) angeordnet ist.

4. Kraftstoffeinspritzsystem (110) gemäß einem der vorhergehenden Ansprüche, **dadurch gekennzeichnet, dass** das mindestens eine Druckhalteventil (130) derart ausgebildet ist, dass der in dem mindestens einen Niederdruckspeicher (126) aufrechterhaltbare Druck einen vorgegebenen Maximaldruck nicht übersteigt.

5. Kraftstoffeinspritzsystem (110) gemäß einem der vorhergehenden Ansprüche, **dadurch gekennzeichnet, dass** der in dem mindestens einen Niederdruckteil (132) aufrechterhaltbare Druck zwischen 5 bar und 20 bar, vorzugsweise 10 bar, beträgt.

6. Kraftstoffeinspritzsystem (110) gemäß einem der vorhergehenden Ansprüche, **dadurch gekennzeichnet, dass** der mindestens eine Niederdruckspeicher (126) eine Verbindung (134) zwischen dem mindestens einen Niederdruckspeicher (126) und der mindestens einen Dosiereinrichtung (136) und die mindestens eine Dosiereinrichtung (136) keine zusätzliche Pumpe aufweisen.

7. Kraftstoffeinspritzsystem (110) gemäß einem der vorhergehenden Ansprüche, **gekennzeichnet durch** ein Druckmesssystem (144) zur Erfassung des Drucks in dem mindestens einen Niederdruckteil (126).

8. Kraftstoffeinspritzsystem (110) gemäß dem vorhergehenden Anspruch, **gekennzeichnet** zusätzlich durch mindestens ein Steuergerät (146), wobei das Steuergerät (146) ausgestaltet ist, um die mindestens eine Dosiereinrichtung (136), insbesondere eine Dosierdauer, in Abhängigkeit vom erfassten Druck in dem mindestens einen Niederdruckteil (126) zu steuern.

9. Kraftstoffeinspritzsystem (110) gemäß einem der vorhergehenden Ansprüche, **dadurch gekennzeichnet, dass** die mindestens eine Einrichtung (142) zur Nachbehandlung von Abgasen der Verbrennungskraftmaschine mindestens eines der folgenden Elemente aufweist: einen Filter, insbesondere einen Partikelfilter, insbesondere einen NOx-Partikelfilter und/oder einen Rußpartikelfilter; einen Katalysator, insbesondere einen Speicherkatalysator, insbesondere einen NOx-Speicherkatalysator.

10. Kraftstoffeinspritzsystem (110) gemäß einem der vorhergehenden Ansprüche, **dadurch gekennzeichnet, dass** die mindestens eine Einrichtung (142) zur Nachbehandlung der Abgase mindestens eine Heizeinrichtung aufweist.

11. Kraftstoffeinspritzsystem (110) gemäß einem der vorhergehenden Ansprüche, **dadurch gekennzeichnet, dass** das mindestens eine Druckhalteventil (130) eine Drosselbohrung aufweist.

## Claims

1. Fuel injection system (110) for an internal combustion engine, having a high-pressure part (122) and a low-pressure part (132), with it being possible in the high-pressure part (122) for fuel from at least one high-pressure accumulator (120) to be supplied to at least one fuel injector (112), with the at least one fuel injector (112) being connected, in the low-pressure part (132), to at least one low-pressure accumulator (126), with it being possible for a pressure to be maintained in the at least one low-pressure accumulator (126) by means of at least one pressure-holding valve (130), also having at least one dosing device (136) for the dosed introduction of fuel into an exhaust tract (140), with the at least one dosing device (136) being fluidically connected to the at least one low-pressure accumulator (126), with it being possible for the dosing device (136) to be arranged upstream, in terms of the exhaust-gas flow, of at least one device (142) for the aftertreatment of exhaust gases of the internal combustion engine.

2. Fuel injection system (110) according to the preceding claim, **characterized in that** the at least one dosing device (136) has at least one dosing valve.

3. Fuel injection system (110) according to one of the two preceding claims, **characterized in that** the at least one dosing device (136) is arranged in an exhaust manifold (138) of the exhaust tract (140).

4. Fuel injection system (110) according to one of the preceding claims, **characterized in that** the at least one pressure-holding valve (130) is designed such that the pressure which can be maintained in the at least one low-pressure accumulator (126) does not exceed a predefined maximum pressure.

5. Fuel injection system (110) according to one of the preceding claims, **characterized in that** the pressure which can be maintained in the at least one low-pressure part (132) lies between 5 bar and 20 bar, and is preferably 10 bar.

6. Fuel injection system (110) according to one of the preceding claims, **characterized in that** the at least one low-pressure accumulator (126) has a connection (134) between the at least one low-pressure accumulator (126) and the at least one dosing device (136), and the at least one dosing device (136) has no additional pump.

7. Fuel injection system (110) according to one of the preceding claims, **characterized by** a pressure measuring system (144) for detecting the pressure in the at least one low-pressure part (126).

8. Fuel injection system (110) according to the preceding claim, additionally **characterized by** at least one control unit (146), with the control unit (146) being designed to control the at least one dosing device (136), in particular a dosing duration, as a function of the pressure detected in the at least one low-pressure part (126).

9. Fuel injection system (110) according to one of the preceding claims, **characterized in that** the at least one device (142) for the aftertreatment of exhaust gases of the internal combustion engine has at least one of the following elements: a filter, in particular a particle filter, in particular a NOx particle filter and/or a soot particle filter; a catalytic converter, in particular a storage catalytic converter, in particular a NOx storage catalytic converter.

10. Fuel injection system (110) according to one of the preceding claims, **characterized in that** the at least one device (142) for the aftertreatment of the exhaust gases has at least one heating device.

11. Fuel injection system (110) according to one of the preceding claims, **characterized in that** the at least one pressure-holding valve (130) has a throttle bore.

## Revendications

1. Système (110) d'injection de carburant pour moteur à combustion interne,
qui présente une partie (122) à haute pression et une partie (132) à basse pression,
du carburant provenant d'au moins une réserve (120) à haute pression pouvant être amené dans la partie (122) à haute pression à au moins un injecteur (112) de carburant,
le ou les injecteurs (112) de carburant étant reliés dans la partie (132) à basse pression à au moins une réserve (126) à basse pression,
la pression pouvant être maintenue par au moins une soupape (130) de maintien de pression dans la ou les réserves (126) à basse pression,
et présentant en outre au moins un dispositif de dosage (136) qui apporte de manière dosée du carburant dans un conduit d'échappement (140),
le ou les dispositifs de dosage (136) étant reliés à écoulement à la ou aux réserves (126) à basse pression,
le dispositif de dosage (136) pouvant être disposé en amont d'un dispositif (142) de post-traitement des gaz d'échappement du moteur à combustion interne dans la direction d'écoulement des gaz d'échappement.

2. Système (110) d'injection de carburant selon la revendication précédente, **caractérisé en ce que** le ou les dispositifs de dosage (136) présentent au moins une soupape de dosage.

3. Système (110) d'injection de carburant selon l'une des deux revendications qui précèdent, **caractérisé en ce que** le ou les dispositifs de dosage (136) sont disposés dans un coude (138) du conduit (140) de gaz d'échappement.

4. Système (110) d'injection de carburant selon l'une des revendications précédentes, **caractérisé en ce que** la ou les soupapes (130) de maintien de pression sont configurées de telle sorte que la pression qui peut être maintenue dans la ou les réserves (126) à basse pression ne dépasse pas une pression maximale prédéterminée.

5. Système (110) d'injection de carburant selon l'une des revendications précédentes, **caractérisé en ce que** la pression qui peut être maintenue dans la ou les parties (132) à basse pression est comprise entre 5 bars et 20 bars et est de préférence de 10 bars.

6. Système (110) d'injection de carburant selon l'une des revendications précédentes, **caractérisé en ce que** la ou les réserves (126) à basse pression présentent une liaison (134) entre la ou les réserves (126) à basse pression et le ou les dispositifs de dosage (136) et **en ce que** le ou les dispositifs de dosage (136) ne présentent pas de pompe supplémentaire.

7. Système (110) d'injection de carburant selon l'une des revendications précédentes, **caractérisé par** un système (144) de mesure de pression qui détecte la pression qui règne dans la ou les parties (126) à basse pression.

8. Système (110) d'injection de carburant selon l'une des revendications précédentes, **caractérisé par** au moins un appareil de commande (146), l'appareil de commande (146) étant configuré pour commander le ou les dispositifs de dosage (136) et en particulier la durée de dosage en fonction de la pression détectée dans la ou les parties (126) à basse pression.

9. Système (110) d'injection de carburant selon l'une des revendications précédentes, **caractérisé en ce que** le ou les dispositifs (142) de post-traitement des gaz d'échappement du moteur à combustion interne présentent au moins un des éléments suivants : un filtre, en particulier un filtre à particules, en particulier un filtre à particules et NOx et/ou un filtre à particules de suie ; un catalyseur, en particulier un catalyseur-accumulateur et en particulier un catalyseur-accumulateur de NOx.

10. Système (110) d'injection de carburant selon l'une des revendications précédentes, **caractérisé en ce que** le ou les dispositifs (142) de post-traitement des gaz d'échappement présentent au moins un dispositif de chauffage.

11. Système (110) d'injection de carburant selon l'une des revendications précédentes, **caractérisé en ce que** la ou les soupapes (130) de maintien de pression présentent un alésage étranglé.
